# EUROPEAN PATENT APPLICATION

(11) **EP 4 530 314 A1**
(43) Date of publication of application: **02.04.2025**
(21) Application number: 24202949.4
(22) Date of filing: 26.09.2024
(51) Int. Cl.: C08L 7/00, C08K 3/04, C08L 91/06, C08L 91/00, C08K 3/22, C08K 3/06, C08K 5/47, C08K 5/39, C08K 5/40, B60C 1/00

(54) **HIGH MILEAGE RUBBER COMPOSITION FOR A RADIAL MEDIUM TRUCK TIRE TREAD**

(30) Priority: 29.09.2023 US 202318477889
(71) Applicant: The Goodyear Tire & Rubber Company, Akron, OH 44316 (US)
(72) Inventor: WASSEN, Marine Sophie Francoise, L-7515 Mersch (LU); NEUNLIST, Virginie Audrey, B-6720 Hachy (BE)
(74) Representative: Kutsch, Bernd

(57) **Abstract**

A vulcanizable rubber composition for a tire tread is disclosed. The rubber composition comprises, expressed by weight per hundred parts of elastomer (phr): 100 phr of an elastomer component, the elastomer component comprising natural rubber and a polydiene rubber; at least 40 phr of carbon black; optionally, one or more processing aids, the one or more processing aids being selected from a liquid plasticizer, a wax, and mixtures thereof; and a curative system comprising a sulfur-based curing agent, a zinc-based cure activator, an organic cure activator, and a combination of cure accelerators, the combination of cure accelerators comprising: (i) a sulfenamide accelerator, (ii) a metal dithiocarbamate accelerator, and (iii) at least one of a thiazole polysulfide accelerator and a thiuram polysulfide accelerator. The rubber composition can be used in a truck tire tread with high mileage.

## Description

### TECHNICAL FIELD

Described herein is a rubber composition suitable for forming a component of a pneumatic tire, such as a tire tread. The composition finds particular application in providing an on-the-road tire with high mileage and low rolling resistance.

### BACKGROUND

Rubber compositions suited to use in tires often include a mixture of elastomers, together with reinforcing fillers, such as carbon black and silica. For radial medium truck (RMT) tires e.g., for regional haul and urban applications, lower rolling resistance, contributing to low CO₂ emissions of the vehicles, is desirable. The tire tread is a significant contributor to the overall tire performance. The friction energy dissipated under deformation when rolling is determined, among other factors, by the material properties of the rubber composition used.

In order to reduce the rolling resistance, rubber compositions including various types of synthetic and natural rubber have traditionally been utilized in making tire treads. However, lower rolling resistance generally leads to a tradeoff in tread wear.

Rubber compositions have been developed for improving tread wear without a significant increase in rolling resistance. For example, U.S. Pat. No. 11,118,036 B2 describes a vulcanizable rubber composition which includes a solution-polymerized styrene-butadiene rubber, polybutadiene, silica, a coumarone-indene resin, and a hydrocarbon resin derived from styrene and alpha methyl styrene. U.S. Pat. No. 11,214,667 B2 describes a tire tread rubber composition which includes a solution-polymerized styrene-butadiene rubber, a natural rubber or synthetic polyisoprene; cis-1,4 polybutadiene, a process oil, a hydrocarbon resin, and silica.

Such compositions are generally cured with a sulfur-based curing agent, such as elemental sulfur. High levels of sulfur can improve the level of curing, but can make the cured composition more susceptible to age hardening. There remains a need for a rubber composition which can provide a tire tread with high wear resistance and good aging properties for high mileage applications.

### SUMMARY OF THE INVENTION

The invention relates to a rubber composition in accordance with claim 1, to a tire tread in accordance with claim 12, to a pneumatic tire in accordance with claim 13, and to a method in accordance with claim 14 or 15, respectively.

Dependent claims refer to preferred embodiments of the invention.

In accordance with a preferred aspect of the invention, a tire tread is formed from a vulcanizable rubber composition. The rubber composition includes, expressed by weight per hundred parts of elastomer (phr), 100 phr of an elastomer component, the elastomer component comprising natural rubber and a polydiene rubber; at least 40 phr of carbon black; optionally, one or more processing aids, the one or more processing aids being selected from a liquid plasticizer, a wax, and mixtures thereof; a curative system comprising a sulfur-based curing agent, a zinc-based cure activator, an organic cure activator, and a combination of cure accelerators. The combination of cure accelerators includes (i) a sulfenamide accelerator, (ii) a metal dithiocarbamate accelerator, and (iii) at least one of a thiazole polysulfide accelerator and a thiuram polysulfide accelerator.

In various preferred aspects of the invention, which may be combined:
The elastomer component preferably includes 45-65 phr of the natural rubber and 30-55 phr of the polydiene rubber.

The polydiene rubber preferably includes polybutadiene rubber and styrene butadiene rubber in a ratio by weight of at least 1:1, or at least 1.5:1, or at least 2:1, or up to 5:1, or up to 4:1, or up to 3:1, or up to 2.5:1.

The carbon black is preferably present in the rubber composition in an amount of at least 45 phr, or up to 65 phr.

The rubber composition preferably includes no more than 2 phr silica.

The rubber composition preferably includes no more than 1 phr resin.

The combination of cure accelerators preferably include (i) 0.5 phr to 2 phr of the sulfenamide accelerator, (ii) 0.3 phr to 1.2 phr of the metal dithiocarbamate accelerator, and (iii) 0.05 to 0.4 phr of the at least one of the thiazole polysulfide accelerator and the thiuram polysulfide accelerator.

The combination of cure accelerators preferably include (i) 0.8 phr to 1.5 phr of the sulfenamide accelerator, (ii) 0.4 phr to 0.9 phr of the metal dithiocarbamate accelerator, and (iii) 0.07 to 0.2 phr of the at least one of the thiazole polysulfide accelerator and the thiuram polysulfide accelerator.

The sulfenamide accelerator is preferably selected from N-cyclohexyl-2-benzothiazolesulfenamide (CBS), N-tert-butyl-2-benzothiazole-sulfenamide (TBBS), and mixtures thereof.

The metal dithiocarbamate accelerator preferably includes zinc dibenzyl dithiocarbamate (ZBEC).

The at least one of the thiazole polysulfide accelerator and the thiuram polysulfide accelerator preferably include mercaptobenzothiazole disulfide (MBTS).

The rubber composition preferably includes 2.5 phr to 8 phr of the processing aids.

The sulfur-based curing agent preferably provides the rubber composition with 0.3 phr to 1.2 phr of active sulfur.

The zinc-based cure activator preferably consists of zinc oxide at no more than 5 phr of the rubber composition.

The rubber composition preferably includes at least one of an antioxidant and an antiozonant.

A pneumatic truck tire is disclosed included a tread as described in any of the aspects above.

In accordance with another preferred aspect of the invention, a method of forming a tire with high mileage is disclosed. The method includes forming a rubber composition, including combining: 100 phr of an elastomer component, the elastomer component comprising natural rubber and a polydiene rubber; at least 40 phr of carbon black; optionally, one or more processing aids, the one or more processing aids being selected from a liquid plasticizer, a wax, and mixtures thereof; and a curative system comprising a sulfur-based curing agent, a zinc-based cure activator, an organic cure activator, and a combination of cure accelerators. The combination of cure accelerators includes: a sulfenamide accelerator, a metal dithiocarbamate accelerator, and at least one of a thiazole polysulfide accelerator and a thiuram polysulfide accelerator. The method further includes curing the rubber composition to form at least a part of the tire.

A tire as formed by the method is provided.

In accordance with another preferred aspect of the invention, a tire tread formed from a vulcanizable rubber composition is disclosed. The rubber composition includes, expressed by weight per hundred parts of elastomer (phr): 100 phr of an elastomer component, the elastomer component comprising natural rubber, a polybutadiene rubber, and a styrene-butadiene rubber, a ratio by weight of the natural rubber to the polybutadiene rubber being from 50:40 to 60:30, and a ratio by weight of the polybutadiene rubber to the styrene-butadiene rubber being from 30:20 to 40:10; 40 to 70 phr of carbon black; no more than 1 phr resin; no more than 2 phr silica; and a curative system The curative system includes (i) 0.5 to 2.0 phr of a sulfenamide accelerator, (ii) 0.3 to 1.2 phr of a metal dithiocarbamate accelerator, and (iii) 0.05 to 0.4 phr of a thiazole polysulfide accelerator.

### BRIEF DESCRIPTION OF THE DRAWING

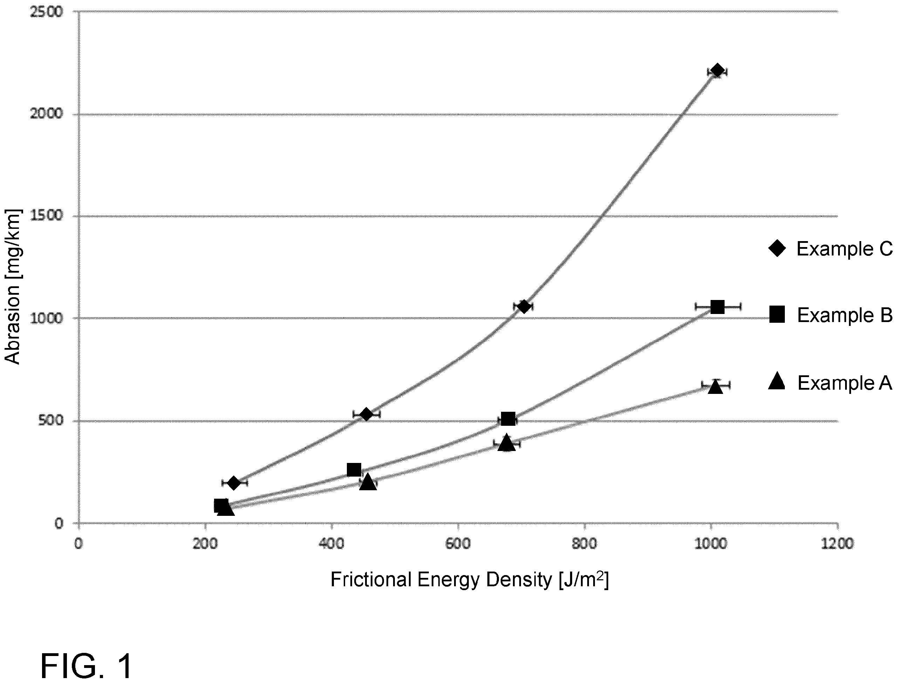

FIGURE 1 is a plot of Abrasion vs Frictional Energy Density for three rubber compositions.

### DETAILED DESCRIPTION OF PREFERRED EMBODIMENTS OF THE INVENTION

A rubber composition is described herein which is suited to use in a tread of a radial medium truck (RMT) tire, particularly for high mileage applications, such as tires used in line-haul applications, but which may also find application in buses and regional delivery trucks. For example, the tires may be used on the drive wheels of a truck cab that is used to pull a trailer for transporting freight. The rubber composition provides improvements in tire wear and aging resistance, leading to an overall higher mileage. The rubber composition benefits from the use of a curative system which is optimized to provide high mileage, without appreciable loss in other properties.

The curative system includes a mixture of accelerators, including a primary accelerator and a combination of secondary (faster-acting) accelerators, which may be referred to as ultra-accelerators, at least one of which may also serve as an anti-reversion agent. This helps to limit aging and heat build-up in the tires. The ultra-accelerators, together with the one or more slower acting primary accelerator(s), are dispersed in a polymer matrix of high natural rubber content and a carbon black filler, which may be free or substantially free of resin. The combination of primary accelerator(s) and ultra-accelerators yields improvements in tread wear and rolling resistance.

In one embodiment, a rubber composition includes a polymer matrix of natural rubber (NR) and at least one synthetic conjugated diene-based elastomer (referred to herein as a polydiene rubber), such as polybutadiene (PBD) and/or styrene-butadiene rubber (SBR), together with carbon black, and a curative system including a sulfur-based curing agent, a fatty acid, zinc oxide, and a mixture of accelerators, including a primary accelerator, such as a sulfenamide accelerator, a first ultra-accelerator, such as a dithiocarbamate, and a second ultra-accelerator, which may contain a thiazole/thiuram functionality.

### Definitions

The terms "rubber" and "elastomer" may be used interchangeably, unless otherwise indicated. The terms "rubber composition" or "compounded rubber" are used interchangeably to refer to "rubber which has been blended or mixed with various ingredients and materials" and such terms are well known to those having skill in the rubber mixing or rubber compounding art. The terms "cure" and "vulcanize" may be used interchangeably unless otherwise indicated.

As used herein, the term "tread," refers to both the portion of a tire that comes into contact with the road under normal inflation and load and optionally also any subtread, unless otherwise indicated.

As used herein, the term "phr" means parts per one hundred parts rubber by weight. In general, using this convention, a rubber composition includes 100 parts by weight of rubber/elastomer. The claimed composition may include other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber.

Unless otherwise noted, the following methods are used for determining properties:
Molecular weights of elastomers, rubber compositions, and resins, such as Mₙ (number average molecular weight), M_{w} (weight average molecular weight) and M_{z} (z average molecular weight), are determined herein using gel permeation chromatography (GPC) according to ASTM D5296-19, "Standard Test Method for Molecular Weight Averages and Molecular Weight Distribution of Polystyrene by High Performance Size-Exclusion Chromatography," using polystyrene calibration standards.

The glass transition temperature (Tg) of an elastomer or elastomer composition is the glass transition temperature(s) of the respective elastomer or elastomer composition in its uncured state or possibly a cured state in a case of an elastomer composition.

Tg values of elastomers are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry," hereinafter ASTM D3418.

The glass transition temperature Tg for a resin is determined as a peak midpoint by a differential scanning calorimeter (DSC) at a temperature rate of increase of 10 °C per minute, according to ASTM D6604-00 (2017), "Standard Practice for Glass Transition Temperatures of Hydrocarbon Resins by Differential Scanning Calorimetry," hereinafter ASTM D6604.

The glass transition temperature Tg for an oil is determined as a peak midpoint by a differential scanning calorimeter (DSC) at a temperature rate of increase of 10 °C per minute, according to ASTM E1356-08 (2014), "Standard Test Method for Assignment of the Glass Transition Temperatures by Differential Scanning Calorimeter."

The softening point of a resin is determined according to ASTM E28-18, "Standard Test Methods for Softening Point of Resins Derived from Pine Chemicals and Hydrocarbons, by Ring-and-Ball Apparatus," hereinafter, ASTM E28, which is sometimes referred to as a ring and ball softening point.

Mooney viscosity (ML 1+4) is measured in M.U. at 100 °C according to ASTM D1646-19a, "Standard Test Methods for Rubber-Viscosity, Stress Relaxation, and Pre-Vulcanization Characteristics (Mooney Viscometer)," hereinafter, ASTM D1646.

The term "alkyl" refers to linear, branched and cycloalkyl groups. The term "aryl" refers to groups including at least one aromatic ring and encompasses alkylaryl groups.

### The Rubber Composition

An exemplary tire tread is formed from a vulcanizable rubber composition including, expressed by weight per hundred parts of elastomer (phr):
1) 100 phr of an elastomer component, the elastomer component including a) natural rubber (NR); and b) a polydiene rubber;
2) at least 40 phr of a filler component, including carbon black;
3) optionally, one or more processing aids, selected from a) a liquid plasticizer, such as an oil; b) a wax; c) a resin, and mixtures thereof;
4) a curative system including a) a sulfur-based curing agent; b) cure activators, including (i) zinc oxide, and (ii) one or more organic activators, such as fatty acids, alkaline earth metal salts of fatty acids, and combinations thereof; d) a mixture of cure accelerators, including (i) a sulfenamide accelerator, (ii) a metal dithiocarbamate ultra-accelerator; (iii) a thiazole polysulfide and/or thiuram polysulfide ultra-accelerator; and optionally e) a cure retardant; and
5) optionally, additional rubber compounding materials, such as antioxidants, antiozonants, antidegradants, and the like, may be included in the rubber composition.

Examples of these components are described below.

### 1) Elastomers

One or more vulcanizable elastomers may be used in the rubber composition. In one embodiment, the elastomers include a natural rubber (NR) and a polydiene rubber. The term "polydiene rubber" refers to a synthetic rubber formed from at least one conjugated diene and optionally one or more other monomers.

A ratio, by weight, of natural rubber to polydiene rubber may be at least 45:55, or at least 50:50, or up to 70:30, or up to 65:35.

One or more of the elastomers may be at least partially hydrogenated and/or functionalized.

### a) Natural Rubber

Natural rubber is primarily cis-polyisoprene. The cis-1 ,4-polyisoprene content of the natural rubber may be at least 90 wt.%, or at least 95 wt.%. In one embodiment, the natural rubber is a natural cis-1 ,4-polyisoprene rubber having a cis-1,4-content of at least 96 percent and a Tg of about -65°C, determined according to ASTM D3418.

Several forms of natural rubber are commercially available. The natural rubber may meet the ISO TSR 20 Grade specification or the ISO TSR 10 Grade specification for purity. An ISO TSR 20 natural rubber has a maximum ash content of 1 wt. %, as determined according to ISO 247:1990, a maximum volatile matter of 0.8 wt. %, as determined according to ISO 248:1991, a maximum nitrogen content of 0.6 wt. %, as determined according to ISO 1656:1996, a minimum initial Wallace plasticity of 30, as determined according to ISO 2007:1991, and a minimum plasticity retention index of 40, as determined according to ISO 2930:1995. For TSR 10, a maximum ash of 0.75 wt. %, a maximum nitrogen of 0.6 wt. %, a maximum volatiles of 0.8 wt. %, a minimum plasticity of 30, and a minimum plasticity retention of 50 are specified. In other embodiments, the natural rubber may be a ribbed smoked sheet (RSS) rubber.

The natural rubber may be used in the rubber composition in an amount of at least 45 phr, or at least 50 phr, or up to 70 phr, or up to 65 phr.

### b) The Polydiene Rubber

The polydiene rubber may include at least one polydiene rubber, which may be a homopolymer, a copolymer or a mixture thereof. In one embodiment, the polydiene rubber includes one or more polydiene rubbers which is/are derived, at least in part, from butadiene. For example, at least 20%, or at least 30% of the units in the polydiene rubber(s) are formed from butadiene.

One suitable polydiene rubber is synthetic polybutadiene rubber (PBD), which is the homopolymerization product of a single monomer: butadiene. In one embodiment, a cis-1,4-polybutadiene rubber is used. Another suitable polydiene rubber is a copolymer of a conjugated diene monomer, such as butadiene, and at least one other monomer, such as a vinylarene monomer, e.g., styrene, together forming, for example, a styrene/butadiene rubber (SBR). PBD and/or SBRs may be hydrogenated and/or functionalized. The functionalization, if used, may be selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer.

In one embodiment, the polydiene rubber includes both PBD and SBR, which may be present in the rubber composition in a ratio by weight of PBD to SBR of at least 1:1, or at least 1.5:1, or at least 2:1, or up to 5:1, or up to 4:1, or up to 3:1, or up to 2.5:1.

In another embodiment, SBR is omitted from the rubber composition.

Suitable polybutadiene rubbers may be prepared, for example, by organic solution polymerization of 1,3-butadiene. The PBD may be characterized, for example, by having at least a 90 wt. % cis-1,4-microstructure content ("high cis" content), or at least 95 wt. %, or at least 96 wt. % cis-1,4-microstructure. The glass transition temperature (Tg), determined according to ASTM D3418, of the PBD may range from -95 to -112 °C. The PBD may have a Mooney viscosity, determined according to ASTM D1646, of 45-65 M.U.

Suitable polybutadiene rubbers are available commercially, such as Budene^{®} 1207, Budene^{®} 1208, Budene^{®} 1223, and Budene^{®} 1280 from The Goodyear Tire & Rubber Company. These high cis-1,4-polybutadiene rubbers can be synthesized utilizing nickel or neodymium catalyst systems, such as those which include a mixture of (1) an organonickel compound, (2) an organoaluminum compound, and (3) a fluorine containing compound, as described, for example, in U.S. Pat. Nos. 5,698,643 and 5,451,646. For example, Budene^{®} 1207, which is nickel catalyzed, has a cis 1,4-content of at least 96 wt. %, a Mooney viscosity of 55, and a Tg of -100 °C to -104 °C, and Budene^{®} 1223, which is neodymium catalyzed, has a cis 1,4-content of at least 96 wt. %, a Mooney viscosity of 55, and a Tg of about -104 °C.

The PBD, where used, may be present in the rubber composition in an amount of at least 10 phr, or at least 15 phr, or at least 20 phr, or up to 50 phr, or up to 40 phr, or up to 35 phr, such as 35±5 phr. In other embodiments, PBD is omitted (and at least partially replaced with SBR).

Styrene/butadiene copolymer rubbers can be formed by polymerization of styrene and 1,3-butadiene monomers. Such copolymers can aid in promoting tire handling and wet skid (wet traction) performance of the tire tread but tend to have a negative impact on mileage.

In one embodiment, the SBR includes or consists of an emulsion polymerization derived styrene-butadiene (ESBR). The ESBR may have a bound styrene content of from 5 to 50 wt. %, such as 20 to 28 wt. % bound styrene or, for some applications, 30 to 45 wt. %. In emulsion polymerization, styrene and 1,3-butadiene are copolymerized as an aqueous emulsion. Emulsion polymerization methods are described, for example, in U.S. Pat. Nos. 5,583,173 A, 7,244,783 B2, and 7,594,528 B2, and U.S. Pub. Nos. 20060266454 A1 and 20140171557 A1.

In another embodiment, the SBR includes or consists of a solution polymerization derived SBR (SSBR). The SSBR may have a bound styrene content of from 5 to 50 wt. %, e.g., 9 to 36, wt. %, or 26 to 31 wt. %. The SSBR can be prepared, for example, by anionic polymerization in an inert organic solvent. For example, the SSBR can be synthesized by copolymerizing styrene and 1,3-butadiene monomer in a hydrocarbon solvent utilizing an organo lithium compound as the initiator. Alternatively, the SSBR is tin-coupled. Other methods of preparing SSBRs are described in US Pat. No. 8,312,905 B2 and US Pub. No. 20140135437 A1.

Methods of preparing functionalized styrene-butadiene rubbers are disclosed, for example, in U.S. Pat. Nos. 7,137,423 B2 and 7,342,070 B2 and US Pub. No. 20080287601 A1. In one embodiment, the SSBR is thio-functionalized for improved stiffness of the rubber composition and/or good hysteresis behavior.

One example ESBR is available as Plioflex 1502NN ^{™} from The Goodyear Tire & Rubber Company. It has a styrene content of 23.5 wt. % and a Tg of -50° C, and is prepared by aqueous emulsion polymerization of styrene and 1,3-butadiene monomers. The ESBR may be oil-extended for ease of processing. One oil-extended ESBR is BUNA^{™} SB 1723-Schkopau, obtainable from Dow, which is manufactured by cold polymerization using mixed rosin acid/fatty acid soaps. It is plasticized with 37.5 parts of mineral oil per 100 parts of rubber and has a Mooney viscosity ML1+4 @ 100°C of 49.

An example polydiene rubber mixture may include (a) 15 to 40 phr cis-1,4-polybutadiene rubber having a cis-1,4-content of at least 96 wt. % and a Tg in a range of -90°C to -110°C, and (b) 5 to 20 phr of styrene/butadiene copolymer rubber having a styrene content in a range of from 20 to 25 weight wt. % and a Tg in a range of -40°C to -60°C, where the sum of a) and b) is at least 35 phr.

Other polydiene rubbers which may be used in the rubber composition include polyisoprene, styrene-isoprene-butadiene terpolymer rubber, butadiene acrylonitrile rubber, hydrated acrylonitrile/butadiene rubber, isoprene/butadiene copolymer, isoprene-isobutylene copolymer, butadiene-based block copolymers, such as styrene-butadiene-styrene block copolymer (SBS), and hydrogenated and functionalized derivatives thereof. In one embodiment, these other polydiene rubbers are used in an amount totaling no more than 10 phr.

### c) Other Elastomers

Other vulcanizable elastomers may be present in the rubber composition in minor amounts (e.g., totaling up to 10 phr, or up to 5 phr, or up to 2 phr, or up to 1 phr), and may be selected from synthetic polyisoprene, halobutyl rubber, e.g., bromobutyl rubber and chlorobutyl rubber, nitrile rubber, polynorbornene copolymer, ethylene-propylene-diene rubber, chloroprene rubber, acrylate rubber, fluorine rubber, silicone rubber, polysulfide rubber, epichlorohydrin rubber, butyl rubber, a terpolymer formed from ethylene monomers, propylene monomers, and/or ethylene propylene diene monomer (EPDM), isoprene-based block copolymers, styrenic block copolymers, styrene-ethylene/butylene-styrene block copolymer (SEBS), styrene-[ethylene-(ethylene/propylene)]-styrene block copolymer (SEEPS), styrene-isoprene-styrene block copolymer (SIS), random styrenic copolymers, hydrogenated styrenic block copolymers, polyisobutylene, ethylene vinyl acetate (EVA) polymers, polyolefins, amorphous polyolefins, semi-crystalline polyolefins, alpha-polyolefins, reactor-ready polyolefins, acrylates, metallocene-catalyzed polyolefin polymers and elastomers, reactor-made thermoplastic polyolefin elastomers, olefin block copolymer, co-polyester block copolymer, polyurethane block copolymer, polyamide block copolymer, thermoplastic polyolefins, thermoplastic vulcanizates, ethylene vinyl acetate copolymer, ethylene n-butyl acrylate copolymer, ethylene methyl acrylate copolymer, neoprene, acrylics, urethane, poly(acrylate), ethylene acrylic acid copolymer, polyether ether ketone, polyamide, atactic polypropylene, polyethylene including atactic polypropylene, ethylene-propylene polymers, propylene-hexene polymers, ethylene-butene polymers, ethylene octene polymers, propylene-butene polymers, propylene-octene polymers, metallocene-catalyzed polypropylene polymers, metallocene-catalyzed polyethylene polymers, ethylene-propylene-butylene terpolymers, copolymers produced from propylene, ethylene, C₄-C₁₀ alpha-olefin monomers, polypropylene polymers, maleated polyolefins, polyester copolymers, copolyester polymers, ethylene acrylic acid copolymer, and/or polyvinyl acetate. Such polymers optionally include a modification and/or functionalization selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer.

### 2) Reinforcing Fillers

The rubber composition may include, in total, at least 40 phr, or at least 45 phr or at least 50 phr, or up to 80 phr, or up to 70 phr, or up to 65 phr or up to 60 phr of one or more particulate reinforcing fillers.

In one embodiment, carbon black (CB) is the only reinforcing filler in the rubber composition. In other embodiments, additional fillers may be employed.

The carbon black may have a specific surface area of at least 8, or at least 20, or at least 100, or at least 120, or up to 132 m²/kg, as determined according to ASTM D6556-21, "Standard Test Method for Carbon Black-Total and External Surface Area by Nitrogen Adsorption." The specific (external) surface area, which is based on the statistical thickness method (STSA), is defined as the specific surface area that is accessible to rubber.

Exemplary carbon blacks useful herein include those with ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21, "Standard Classification System for Carbon Blacks Used in Rubber Products." These carbon blacks have iodine absorptions, as determined according to ASTM D1510-21, ranging from 9 to 145 g/kg and a DBP absorption number, as determined according to ASTM D2414, ranging from 34 to 150 cm³/100 g. For example, N121 grade is a granular carbon black with an Iodine Absorption of about 121 g/kg, a CATB specific surface area of about 121 m²/kg, a DBP absorption of about 132 m²/kg, and an ash content of less than 0.5 wt. %. N220 grade is a granular carbon black with an Iodine Absorption of 116-126 g/kg, a CATB specific surface area of 106-116 m²/kg, a DBP absorption of 109-119 m²/kg, and an ash content of less than 0.5 wt. %.

Reinforcing fillers, other than the carbon black, may be utilized, e.g., in amounts totaling no more than 30 phr, or up to 20 phr, or up to 10 phr, or up to 5 phr, or up to 1 phr, or may be absent. Examples of such additional reinforcing fillers include silica, alumina, aluminum hydroxide, clay (reinforcing grades), magnesium hydroxide, boron nitride, aluminum nitride, titanium dioxide, and combinations thereof.

In one embodiment, components of the rubber composition other than the polydiene rubber, natural rubber, and carbon black (such as other elastomers, other reinforcing fillers, non-reinforcing fillers, coupling agents, resins, processing aids, antioxidants, antiozonants, antidegradants, and the curative system) are present at no more than 40 phr of the rubber composition, or no more than 30 phr, or no more than 25 phr, or no more than 20 phr of the rubber composition.

### 3) Processing Aids

The exemplary rubber composition may include one or more processing aids, which may be selected from a) a liquid plasticizer, such as an oil; b) a wax; c) a resin, and mixtures thereof.

### a) Liquid Plasticizer

The term liquid plasticizer is used to refer to plasticizer ingredients which are liquid at room temperature (i.e., liquid at 25°C and above) and as distinguished from hydrocarbon resins, which are generally solid at room temperature. Generally, liquid plasticizers have a Tg that is below 0°C, generally well below, such as less than -30°C, or less than -40°C, or less than -50°C, such as a Tg of 0°C to -100°C.

Suitable liquid plasticizers include both oils (e.g., petroleum oils as well as plant-sourced oils) and other non-oil liquid plasticizers, such as ether plasticizers, ester plasticizers, phosphate plasticizers, and sulfonate plasticizers. Liquid plasticizer may be added during the compounding process or later, as an extender oil (which is used to extend a rubber). Petroleum based oils may include aromatic oils, naphthenic oils, low polycyclic aromatic (PCA) oils, such as MES, TDAE, and SRAE, and mixtures thereof. Plant oils may include oils harvested from vegetables, nuts, seeds, and mixtures thereof, such as triglycerides.

Liquid plasticizers may be used in the rubber composition at from 0 to 10 phr, or at least 0.5 phr, or at least 1 phr, or at least 2 phr, or at least 4 phr, or up to 8 phr, or up to 7 phr, or up to 6 phr, or up to 3 phr. In one embodiment, a traction resin may be used in place of at least some of the oil, allowing the oil to be present in only small amounts, e.g., 1 phr or less, or to be omitted entirely.

### b) Waxes

Suitable waxes include paraffin waxes and microcrystalline waxes, which may be of the type described in The Vanderbilt Rubber Handbook (1978), pp. 346 and 347. Such waxes can serve as antiozonants.

The wax(es) may be present at 0.1 phr or more, such as at least 0.3 phr, or at least 0.5 phr, or up to 5 phr, or up to 3 phr, or up to 2 phr.

### c) Resin

Resins may be used to improve the wet traction of a tire, but this may be at the expense of high mileage. In one embodiment, resin is omitted from the rubber composition. In another embodiment, a small amount of resin may be used, such as up to 1 phr, or up to 0.5 phr, or up to 0.2 phr. When the rubber composition includes one or more resins, the resin(s) may be selected from a hydrocarbon traction resin, a natural resin, such as rosin, a tackifying resin, such as unreactive phenol formaldehyde, a stiffness resin, such as a reactive phenol formaldehyde resin, and combinations thereof.

Examples of hydrocarbon traction resins which may be used include those with a glass transition temperature Tg which is greater than 20° C, or at least 30°C, or up to 50°C, as determined according to ASTM D6604. The traction resin may have a softening point of at least 30°C, or at least 70° C, or up to 100°C, as determined according to ASTM E28. The Tg is generally lower than its softening point, and the lower the Tg the lower the softening point. The hydrocarbon traction may be selected from terpene-phenol resins, terpene resins, terpene-styrene resins, styrene/alpha-methylstyrene resins, coumarone-indene resins, polydicyclopentadiene (DCPD) resins, DCPD/C9 resins, hydrogenated DCPD resins (H2DCPD), H2DCPD/C9 resins, C5 resins, C9 resins, H2C5 resins, H2C9 resins, C5/C9 resins, rosin derived resins, and copolymers and mixtures thereof (H2 indicates that the resin is hydrogenated, C5 and C9 indicate the number of carbon atoms, prior to any functionalization, in the monomers from which the resins are formed). Such resins may be partially or fully hydrogenated and/or functionalized. Exemplary hydrocarbon-based traction resins are described in U.S. Pat. No. 11,214,667 B2. Exemplary resins are also described in US Pat. No. 11,591,454 B2.

Resins may also be derived from naturally-occurring rosins and derivatives thereof, including, for example, gum rosin, wood rosin, and tall oil rosin. Gum rosin, wood rosin, and tall oil rosin have similar compositions, although the amount of components of the rosins may vary. Such resins may be dimerized, polymerized or disproportionated. Such resins may be in the form of esters of rosin acids and polyols such as pentaerythritol or glycol.

### 4. Curative System

The curative system effects the vulcanization (curing) of the rubber composition and may include a) a sulfur-based curing agent, b) a cure activator, (c) a combination of cure accelerators, and optionally d) a cure inhibitor. The curative system may be used in the rubber composition at 0.5 to 20 phr, or at least 5 phr, or at least 7 phr, or up to 10 phr.

### a) Sulfur-based curing agent

The vulcanization (curing) of the rubber composition is conducted in the presence of a curing (vulcanizing) agent, such as a sulfur-based curing agent. Examples of suitable sulfur-based curing agents include elemental sulfur (free sulfur), insoluble polymeric sulfur, soluble sulfur, and sulfur donating curing agents, for example, an amine disulfide, polymeric polysulfide, or sulfur olefin adduct, and mixtures thereof.

Sulfur-based curing agents may be used in an amount (expressed as pure sulfur) of at least 0.1 phr, such as at least 0.2 phr, or at least 0.4 phr, or at least 0.5 phr, or up to 1.2 phr, or up to 1 phr, or up to 0.7 phr. By using a sulfur-donating accelerator, the amount of sulfur-based curing agent can be minimized.

### b) Cure Activators

Cure activators are additives which are used to support vulcanization. Cure activators include both (i) inorganic cure activators and (ii) organic cure activators. Zinc oxide is the most widely used inorganic cure activator and may be present in an amount of at least 1 phr, such as at least 2 phr, or up to 6 phr or up to 5 phr, or up to 4 phr.

Organic cure activators include fatty acids, such as stearic acid, palmitic acid, lauric acid, and mixtures thereof, calcium and zinc salts of unsaturated fatty acids, amides of unsaturated fatty acids, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea.

In one embodiment, a mixture of fatty acids, which is predominantly stearic acid, is used as the organic activator.

The total amount of organic cure activator(s) may be at least 0.1 phr, such as at least 0.5 phr, or at least 1 phr, or at least 1.5 phr, or up to 5 phr, or up to 4 phr, or up to 3 phr.

### c) Cure Accelerators

Cure accelerators, like activators, act as catalysts for the vulcanization agent. Accelerators are used to control the time and/or temperature required for vulcanization and also to improve the properties of the vulcanizate, such as through crosslinking. Ultra-accelerators generally have a fast vulcanization initiation time. In the present case, a combination of primary and secondary accelerators allows minimizing the amount of sulfur curing agent while also yielding crosslinks that have been found to provide improvements in mileage of the resulting tire. The ultra-accelerators employed begin the curing process more quickly than other accelerators, creating shorter crosslinks which are desirable for the present application. In particular, the ultra-accelerators may undergo an additional reaction forming stable monosulfide crosslinks, beyond the crosslinks formed with sulfenamide systems. This reduces the need for other compounding techniques, such as increasing sulfur levels to reach a required cure state, which can make the rubber composition more susceptible to age hardening. The ultra-accelerators can also serve as anti-reversion aids, protecting the polymer matrix of a formed tire tread, particularly when it becomes hot. This helps to reduce chipping and chunking, in which small pieces of the tire break off.

The exemplary combination of accelerators includes a sulfenamide accelerator, a metal dithiocarbamate accelerator, and a thiazole/thiuram polysulfide accelerator.

The total amount of the cure accelerators may be from 0.8 to 5 phr, or at least 0.9 phr, or at least 1 phr, or at least 1.2 phr, or at least 1.5 phr, or up to 4 phr, or up to 3 phr, or up to 2 phr, or up to 1.7 phr.

A ratio of the total weight of the cure accelerators to the total weight of sulfur in the sulfur-based curing agent may be at least 1:1 or at least 1.2:1, or at least 1.5:1, or up to 3:1, or up to 2:1.

### (i) The Sulfenamide Accelerator

The sulfenamide accelerator serves as a primary accelerator. Primary accelerators generally provide a delayed curing reaction (higher activation temperature), but are more resistant to decomposition than ultra-accelerators. The sulfenamide accelerator can be a benzothiazole sulfenamide, which may be selected from N-cyclohexyl-2-benzothiazole sulfenamide (CBS), N-tert-butyl-2-benzothiazole sulfenamide (TBBS), N-dicyclohexyl-2-benzothiazole sulfenamide (DCBS), N-oxydiethylenebenzothiazole-2-sulfenamide, N,N-diisopropyl benzothiozole-2-sulfenamide, and mixtures thereof. Such sulfenamide accelerators lack any sulfur-sulfur linkages (-S-S-). In one embodiment, the sulfenamide accelerator includes or consists of TBBS.

Sulfenamides can be prepared by the reaction of 2-mercaptobenzothiazole with an N-chloramine or by oxidation of an amine salt of 2-mercaptobenzothiazole.

The sulfenamide accelerator may be present in the rubber composition in an amount of at least 0.5 phr, such as at least 0.8 phr, or up to 2 phr, or up to 1.5 phr, or up to 1.2 phr, or up to 1.0 phr. For example, the sulfenamide(s), such as TBBS, may be present at 0.95 ± 0.1phr.

A ratio, by weight, of the primary accelerator(s) to the ultra-accelerators may be at least 1.1:1, or at least 1.2:1, or up to 1.5:1, or up to 1.3:1.

### (ii) The Metal Dithiocarbamate Accelerator

The metal dithiocarbamate serves as a first ultra-accelerator. The metal in the metal dithiocarbamate may be selected from zinc, sodium, copper, bismuth, and tellurium, with zinc being common. The dithiocarbamate may be selected from dialkyl dithiocarbamates (where the alkyl group may be selected from methyl, ethyl, butyl), diaryl dithiocarbamates (where the aryl group may be benzyl), and mixtures thereof. The metal dithiocarbamates are characterized by the metal being directly linked to two or more sulfur atoms (-S-Zn-S-, in the case of zinc, four S-Te links in the case of tellurium) within the compound. Examples of metal dithiocarbamate accelerators include zinc dibenzyl dithiocarbamate (ZBEC), sodium dibenzyl dithiocarbamate, zinc dibutyl dithiocarbamate (ZDBC), zinc diethyl dithiocarbamate, zinc dimethyl dithiocarbamate, copper dimethyl dithiocarbamate (CuDD), tellurium diethyl dithiocarbamate (TDEC), zinc diisononyl dithiocarbamate, zinc pentamethylene dithiocarbamate, and mixtures thereof. In one embodiment, the metal dithiocarbamate includes or consists of zinc dibenzyl dithiocarbamate.

The metal dithiocarbamate accelerator may be present in the rubber composition in an amount of at least 0.3 phr, such as at least 0.4 phr, or up to 2 phr, or up to 1.5 phr, or up to 1.2 phr, or up to 1.0 phr. For example, the metal dithiocarbamate accelerator, such as zinc dibenzyl dithiocarbamate, may be present at 0.66 ± 0.07 phr.

A ratio, by weight, of the sulfenamide accelerator to the metal dithiocarbamate accelerator may be at least 3:1, or at least 4:1, or up to 10:1, or up to 8:1.

### (iii) The Thiazole or Thiuram Polysulfide Accelerator

The thiazole polysulfide or thiuram polysulfide accelerator serves as a second ultra-accelerator. A polysulfide includes two or more, such as up to eight, or up to four, linked sulfur atoms. In the case of a thiazole polysulfide, it may be mercaptobenzothiazole disulfide (MBTS).

In the case of a thiuram polysulfide, it may be selected from an alkyl thiuram disulfide, an alkyl thiuram tetrasulfide, an aryl thiuram disulfide, an aryl thiuram tetrasulfide, and mixtures thereof. Both thiuram polysulfides and thiazole polysulfides include a sequence of two or more sulfur atoms that are connected, at each end to a carbon, which, in turn, is directly connected to a sulfur atom and a nitrogen atom.

In one embodiment, the thiuram polysulfide is of the general form: 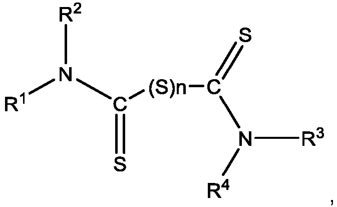 where n is at least 2, such as up to 6, or up to 4, R¹, R², R³, and R⁴ are each independently an alkyl or aryl group, the alkyl or aryl group optionally containing one or more heteroatoms selected from O, S, and N, or where R¹ and R² and/or R³ and R⁴, together with the respective connected nitrogen, form a ring of a cycloalkyl or aryl group, which optionally contains one or more heteroatoms selected from O, S, and N.

Examples of thiuram polysulfide accelerators include tetramethyl thiuram disulfide (TMTD), tetraethyl thiuram disulfide (TETD), bis(N-benzyl piperazino) thiuram disulfide (BPTD), tetrabenzyl thiuram disulfide (TBzTD), tetramethyl thiuram disulfide (TMTD), tetraethyl thiuram disulfide (TETD), tetraisobutyl thiuram disulfide (TiBTD), dipentamethylene thiuram disulfide, dipentamethylene thiuram tetrasulfide (DPTT), dipentamethylene thiuram hexasulfide, bis(4-methyl-1-piperazinylthiocarbonyl) disulfide, dimorpholine thiuram disulfide, and combinations thereof. In one embodiment, the second ultra-accelerator includes or consists of mercaptobenzothiazole disulfide.

The thiazole polysulfide or thiuram polysulfide accelerator may be present in the rubber composition in an amount of at least 0.05 phr, such as at least 0.07 phr, or up to 0.4 phr, or up to 0.2 phr, or up to 0.15 phr, or up to 0.12 phr. For example, the thiazole polysulfide, such as MBTS, may be present at 0.09 ± 0.01 phr.

### d) Cure Retardants

Cure retardants may be used to control the vulcanization process and generally retard or inhibit vulcanization until the desired time and/or temperature is reached. Example cure retardants include N-(cyclohexylthio)phthalimide.

The amount of cure retardant, if used, may be 0.1 to 2 phr, or at least 0.2 phr, or up to 1 phr, or up to 0.5 phr. In one embodiment, no cure retardants are used.

### 5) Antioxidants, Antidegradants and Antiozonants

Various compounds may be incorporated in the rubber composition which help to reduce oxidation, ozone degradation, and other forms of degradation. In total these compounds may be present in the rubber composition at 1 phr or more, such as at least 2 phr, or at least 2.5 phr, or up to 6 phr, or up to 5 phr. In other embodiments, they may be absent.

Exemplary antidegradants suited to use in the rubber composition include amine based antioxidants, such as paraphenylenediamines (PPDs) including alkyl-aryl paraphenylene diamines, e.g., N-(1,3-dimethylbutyl)-N'-phenyl-p-phenylenediamine (6PPD), para-phenylenediamines such as N,N'-diphenyl-1,4-phenylenediamine (DPPD), and trimethyl-dihydroquinoline (TMQ) antidegradants and others, such as those disclosed in The Vanderbilt Rubber Handbook (1978), pages 344-347.

In addition to the above ingredients, the rubber composition may include other rubber compounding ingredients, such as a peptizer, such as pentachlorothiophenol, dibenzamidodiphenyl disulfide, or a mixture thereof. Typical amounts of peptizer, if used, may be 0.1 phr to 1 phr.

### Preparation of the Rubber Composition

Rubber compositions may be prepared by mixing the vulcanizable elastomers, fillers, such as carbon black, and other rubber compounding ingredients, not including the curing agent, in at least one sequential mixing stage with at least one mechanical mixer, usually referred to as a "non-productive" mixing stage, or stage(s), to an elevated temperature under high shear rubber mixing conditions, followed by a final "productive" mixing stage, in the sulfur-based curing agent and cure accelerators are added to the mixture and mixed at a lower mixing temperature to avoid unnecessarily pre-curing the rubber mixture during the productive mixing stage. The ingredients may be mixed in the non-productive mixing stage(s) for 2 minutes to a temperature of 130°C to 200°C, e.g., 150°C to 165 °C. Once the curing agent is added, the subsequent productive mixing step may be conducted at a temperature below the vulcanization (cure) temperature and/or for a short time, in order to avoid unwanted pre-cure of the rubber composition, e.g., no more than 120°C, such as at least 60°C, e.g., for 2 minutes at a temperature of 110-115°C. Mixing may be performed, for example, by kneading the ingredients together in a Banbury mixer or on a milled roll. The rubber composition may be cooled to a temperature below 40 °C between each of the mixing stages. For example, the rubber composition may be dumped from the mixer after each mixing step, sheeted out from an open mill or onto a roller die, and allowed to cool to below 40°C after each mixing step.

When the curing agent, cure accelerators and any other ingredients added in the productive mixing step are thoroughly mixed into the rubber composition, the rubber composition may be molded or otherwise formed into the shape of a green component of a tire, such as a tire tread. The temperature of the green component may be raised to effect cure. Curing of the pneumatic tire or a part thereof may be carried out at a temperature of from 120°C to 200°C, e.g., at least 140°C, or up to 180°C, or 150°C, for at least 10 minutes. Any of the usual vulcanization processes may be used, such as heating in a press or mold, or heating with superheated steam or hot air. Such tires can be built, shaped, molded and cured by various methods which are known and will be readily apparent to those having skill in such art.

In one embodiment, a tire is provided, the tire having a tread which is formed, at least in part, from the exemplary rubber composition. Other parts of the tire, such as the tire sidewalls, may additionally, or alternatively, be formed, at least in part, from a rubber composition as described herein. The tire may be a pneumatic tire for an on-the-road vehicle, such as a bus or truck, or an automobile, or a tire for an off-road vehicle, airplane or the like. The tire tread may have a tread depth of at least 20 mm, e.g., at least 22 mm, such as up to 28 mm, or up to 27 mm, which is suitable for use in a truck.

The rubber composition is not limited to use in tires but may find application in rubber hoses, rubber gloves, and surgical instruments.

### Example Compositions

Table 1 illustrates exemplary rubber compositions in accordance with aspects of the exemplary embodiment.

**TABLE 1: Example Rubber Compositions (phr)**

| **Component** | **Example 1** | **Example 2** |
|---|---|---|
| Natural Rubber | 45-65 | 50-60 |
| Polybutadiene | Totaling 30-55 phr | 30-40 |
| Styrene-butadiene rubber | | 10-20 |
| Carbon black | 40-70 | 45-65 |
| Processing oil | 0.5-8 | 2-6 |
| Wax (Paraffin wax and/or microcrystalline wax) | 0.5-2.5 | 0.5-2 |
| Resin | 0-1 | 0-0.2 |
| Antidegradants, antiozonants, and antioxidants | 2.0-6.0 | 2.5-5.0 |
| Organic cure activator, e.g., a mixture of fatty acid and/or fatty acid soaps | 1.0-6.0 | 2-5 |
| Inorganic cure activator, e.g., Zinc Oxide | 1.0-7.0 | 2.0-4.0 |
| Sulfenamide cure accelerator, e.g., N-cyclohexyl-2-benzothiazole sulfenamide (CBS) or N-tert-butyl-2-benzothiazole sulfenamide (TBBS) | 0.5-2.0 | 0.8-1.5 |
| First ultra-accelerator, e.g., zinc dibenzyldithiocarbamate | 0.3-1.2 | 0.4-0.9 |
| Second ultra-accelerator, e.g., mercaptobenzothiazole disulfide (MBTS) | 0.05-0.4 | 0.07-0.2 |
| Sulfur-based curing agent, e.g., elemental sulfur | 0.3-1.2 | 0.4-0.7 |

### Tire Tread Properties

The use of the rubber composition in tires, such as tire treads, may result in a tire having improved or desirable tread properties. These improved or desirable properties may include improved mileage while retaining other properties, such as rolling resistance, ability to maintain high speeds, and resistance to chipping and chunking.

Without intending to limit the scope of the exemplary embodiment, the following examples illustrate preparation of an exemplary rubber composition and properties thereof.

### EXAMPLES

### EXAMPLE 1

A rubber composition (Example A) is prepared using the formulation shown in TABLE 2. The composition is mixed in a plant-scale mixer in four stages, three of which are non-productive and the final stage is productive. In the first stage, the mixture is dropped when it reaches 165 °C, the second stage at 160°C, the third stage at 155 °C, and the final, productive stage at 110 °C. The formulations are mixed in a laboratory mixer. In the first stage, the elastomers, together with some of the carbon black, the naphthenic oil, zinc oxide and stearic acid are combined, in the second stage, the remainder of the carbon black is added, together with waxes and antiozonant. Sulfur and accelerators are added in the final stage.

A comparative formulation (Example B) is also prepared in a similar manner to Example A. Example B has a higher sulfur (1.0 vs 0.55 phr) and no zinc dibenzyl dithiocarbamate accelerator.

Prototype tires are built using a tread formed from the rubber compositions to demonstrate the benefits in terms of physical properties and tire performance, as compared with the comparative formulation (Example B).

**TABLE 2: Rubber Compositions (expressed as phr)**

| **Component** | **Example A** | **Example B** |
|---|---|---|
| Natural rubber (NR) ¹ | 50 | 50 |
| Polybutadiene (PBD) ² | | 25 |
| Polybutadiene (PBD) ^{2A} | 35 | |
| Styrene-butadiene rubber (SBR) ³ | 15 | 25 |
| Carbon black ⁴ | 55 | 55 |
| Processing oil ⁵ | 5 | 5 |
| Wax ⁶ | 1.5 | 1.5 |
| Antidegradants ⁷ | 3 | 3 |
| Fatty acid ⁸ | 2.5 | 2.5 |
| ZnO | 3 | 3 |
| Sulfur ⁹ | 0.55 | 1 |
| Sulfenamide primary accelerator ¹⁰ | 0.95 | 0.95 |
| Dithiocarbamate ultra-accelerator ¹¹ | 0.66 | - |
| Thiazole ultra-accelerator ¹² | 0.09 | 0.09 |
| Total phr | 172.25 | 172.04 |
| Specific gravity | 1.117 | 1.119 |

| | | |
|---|---|---|
| ¹ Technically Specified Rubber (TSR). ² relatively high cis-1,4-polybutadiene rubber, solution polymerized, nickel catalyzed homopolymer of butadiene, obtained as BUDENE^{®} 1207 from The Goodyear Tire & Rubber Company (prepared by nickel catalysis of 1,3-butadiene monomer), having an onset Tg of about -109 °C, a cis-1,4-content of 97%, and a Mooney viscosity of 55, stabilized with a non-staining antioxidant. ^{2A} relatively high cis-1,4-polybutadiene rubber, solution polymerized, neodymium catalyzed homopolymer of butadiene, obtained as BUDENE^{®} 1223 from The Goodyear Tire & Rubber Company (prepared by neodymium catalysis of 1,3-butadiene monomer), having an onset Tg of about -110° C, a cis-1,4-content of 97%, and a Mooney viscosity of 55, stabilized with a non-staining antioxidant. ³ Solution polymerized copolymer of butadiene and styrene (SSBR), obtained as SLF^{®} 18B10 from The Goodyear Tire Rubber Company (prepared by continuous polymerization of butadiene and styrene, stabilized by a non-staining antioxidant) having a Tg of -70 °C , a Mooney viscosity of 70, 18.5 wt. % styrene. ⁴ ASTM grade N121 carbon black. ⁵ Naphthenic oil. ⁶ Microcrystalline Wax. ⁷ Combination of N-(1,3-dimethylbutyl)-N'-phenyl-p-phenylenediamine (6PPD), an antiozonant and antioxidant, and N,N'-diphenyl-1,4-phenylenediamine (DPPD), an antioxidant, in a 2:1 weight ratio. ⁸ Mixture of fatty acids, predominantly stearic acid. ⁹ Elemental sulfur. ¹⁰ N-tert-butyl-benzothiazole sulfenamide (TBBS) primary accelerator. ¹¹ Zinc dibenzyldithiocarbamate (first ultra-accelerator). ¹² Mercaptobenzothiazole disulfide (MBTS) (second ultra-accelerator). | | |

### Properties of the Rubber Compositions

Physical tests were performed on samples of the rubber compositions. The results are shown in TABLE 3 and FIG. 1.

**TABLE 3: Physical Properties of the Rubber Compositions**

| **Test/Results** | **Example A** | **Example B** |
|---|---|---|
| Tests using Ring R2 at 23 °C | | |
| Modulus G' at 300% strain (MPa) ^{a} | 12 | 11.4 |
| Elongation at Break (%) ^{a} | 485 | 505 |
| Tensile Strength (MPa) ^{a} | 20 | 20.7 |
| Rebound at 23 °C (%) | 58 | 46.7 |
| Modulus G' at 300% strain (MPa) on aged sample ^{a} | 13.2 | 11.4 |
| Elongation at Break (%), aged sample ^{a} | 403 | |
| Tensile Strength (MPa), aged sample ^{a} | 19 | |

| Tests using Ring R2 at 100 °C | | |
|---|---|---|
| Elongation at Break (%) ^{a} | 395 | 447 |
| Rebound at 100°C ^{b} | 58 | |

| Strebler Tests | | |
|---|---|---|
| Tear strength at 100 °C (N/mm) ^{c} | 19 | 20.3 |
| Tear strength at 100 °C (N/m), after aging 4 days at 90°C ^{c} | 15 | 14.1 |
| Rebound at 0°C (%) ^{b} | 40 | 38.6 |
| Rubber Process Analyzer @100°C, 1Hz | | |
| G' on cured sample, @1% strain (MPa)^{d} | 2.15 | 2.17 |
| Tan Δ on cured sample, @10% strain (MPa)^{d} | 0.184 | 0.191 |
| DIN Abrasion ^{e} | 70.4 | 81.7 |

| | | |
|---|---|---|
| ^{a} Data obtained with an Automated Testing System instrument by the Instron Corporation, which can be used to determine ultimate tensile, ultimate elongation, modulii, etc. Data reported in the Table is generated by running the Zwick Roell ring tensile test station. ^{b} Rebound is measured on the cured sample and is an indicator of hysteresis of the compound when subject to loading, as measured according to ASTM D1054-02(2007), "Standard Test Method for Rubber Property-Resilience Using a Goodyear-Healey Rebound Pendulum (Withdrawn 2010)." A higher value for rebound at 100 °C is an indicator of better rolling resistance. ^{c} Adhesion to self, Strebler test. This is a peel test which determines interfacial adhesion by pulling one rubber composition away from the other at a right angle to the untorn test specimen with the two ends of the rubber compositions being pulled apart at a 180° angle to each other. A higher value is an indicator of composition robustness. ^{d} The storage modulus G' at 100°C, after curing, is determined by a Rubber Process Analyzer (RPA) at 1 % strain and 10% strain. Tan Δ, at 10% strain, is the ratio of G" to G'. Storage modulus values are measured on the uncured sample and after cure at different strain values. The measurement on the uncured sample is an indicator of its processability, while measurements on cured samples are indicative of the ride and handling of a tire using the rubber composition in the tread and also an indication of the deformation of the tire blocks thus abrasion/mileage of the tire. ^{e} DIN abrasion is determined by moving a piece of rubber against an abrasive material mounted on a spinning drum. The amount of material scraped away in the abrasion process is expressed as volume loss in cubic millimeters. | | |

The data in TABLE 3 indicates that the Example A composition, using the zinc dibenzyldithiocarbamate ultra-accelerator, in addition to two other accelerators, and a higher PBD to SBR ratio, yields improvements in properties which are expected to yield high mileage, such as lower abrasion.

Abrasion, indicative of tread wear, is determined as Grosch abrasion rate in terms of mg/km of rubber abraded away. The test rubber sample is placed at a slip angle under constant load (Newtons) as it traverses a given distance on a rotating abrasive disk. FIG. 1 shows Grosch abrasion rate at four slip angles (4°, 8°, 12°, and 16°, corresponding to increasing frictional energy densities). Lower abrasion values (mg/km) at a given frictional energy density, indicate higher expected mileage, particularly for the 12° and 16° slip angles, which are considered more relevant for long haul type applications.

As can be seen from FIG. 1, Example A samples performed significantly better than comparative Example B samples, and much better than samples of a conventional tire formulation (Example C).

Tests were also performed on tires having treads formed from Examples A and B. The tires showed comparable rolling resistance (slightly better for Example A) and comparable wet grip performance, demonstrating that the exemplary composition A is able to achieve higher mileage (as indicated from FIG. 1) than comparative Example B, while maintaining rolling resistance and wet grip properties.

High speed performance tests also indicated better performance. Specifically, higher speeds could be maintained by the drivers for tires with Example A treads than for comparative Example B.

Results were also obtained for tire wear of two fleets of trucks running on similar roads. Based on the tire wear results, it is estimated that drive tires of long haul trucks can expect a 10% higher mileage with Example A treads than those similarly constructed but using Example B.

### EXAMPLE 2

Additional rubber compositions were prepared in a similar manner to those in Example 1 by varying amounts of some of the ingredients, as shown in TABLE 4. The samples were mixed in a lab-scale mixer and thus the physical testing results (TABLE 5) can vary slightly from those obtained with the plant-scale mixer in Example 1. All of these samples include a mixture of polybutadiene, styrene-butadiene rubber, and natural rubber as the elastomers. Example A is included for comparison.

**TABLE 4: Rubber Compositions (expressed as phr)**

| **Component** | **EX. A** | **EX. D** | **EX. E** | **EX. F** | **EX. G** |
|---|---|---|---|---|---|
| Natural rubber (NR) ¹ | 50 | 50 | 50 | 50 | 50 |
| Polybutadiene (PBD) ^{2A} | 35 | 35 | 35 | 35 | 35 |
| Styrene-butadiene rubber (SBR) ³ | 15 | 15 | 15 | 15 | 15 |
| Carbon black ⁴ | 55 | 55 | 55 | 55 | 35 |
| Processing oil ⁵ | 5 | 5 | 5 | 5 | 5 |
| Wax ⁶ | 1.5 | 1.5 | 1.5 | 1.5 | 1.5 |
| Antidegradants ⁷ | 3 | 3 | 3 | 3 | 3 |
| Fatty acid ⁸ | 2.5 | 2.5 | 2.5 | 2.5 | 2.5 |
| ZnO | 3 | 3 | 3 | 3 | 3 |
| Sulfur ⁹ | 0.55 | 0.85 | 1.2 | 1.2 | 0.5 |
| Sulfenamide accelerator ¹⁰ | 0.95 | 0.75 | 1 | 1 | 0.5 |
| Dithiocarbamate ultra-accelerator ¹¹ | 0.66 | 0.6 | 0.3 | 0.9 | 0.3 |
| Thiazole ultra-accelerator ¹² | 0.09 | 0 | 0 | 0 | 0 |
| Total Parts | 172.25 | 172.2 | 172.5 | 173.1 | 171.3 |
| Specific Gravity | 1.117 | 1.117 | 1.118 | 1.119 | 1.116 |

**TABLE 4 (Cont.)**

| **Component** | **EX. H** | **EX. I** | **EX. J** | **EX. K** | **EX. L** |
|---|---|---|---|---|---|
| Natural rubber (NR) ¹ | 50 | 50 | 50 | 50 | 50 |
| Polybutadiene (PBD) ^{2A} | 35 | 35 | 35 | 35 | 35 |
| Styrene-butadiene rubber (SBR) ³ | 15 | 15 | 15 | 15 | 15 |
| Carbon black ⁴ | 55 | 55 | 55 | 55 | 55 |
| Processing oil ⁵ | 5 | 5 | 5 | 5 | 5 |
| Wax ⁶ | 1.5 | 1.5 | 1.5 | 1.5 | 1.5 |
| Antidegradants ⁷ | 3 | 3 | 3 | 3 | 3 |
| Fatty acid ⁸ | 2.5 | 2.5 | 2.5 | 2.5 | 2.5 |
| ZnO | 3 | 3 | 3 | 3 | 3 |
| Sulfur ⁹ | 0.5 | 1.2 | 1.2 | 0.5 | 0.5 |
| Sulfenamide accelerator ¹⁰ | 0.5 | 0.5 | 0.5 | 1 | 1 |
| Dithiocarbamate ultra-accelerator ¹¹ | 0.9 | 0.3 | 0.9 | 0.9 | 0.3 |
| Thiazole ultra-accelerator ¹² | 0 | 0 | 0 | 0 | 0 |
| Total Parts | 171.9 | 172 | 172.6 | 172.4 | 171.8 |
| Specific Gravity | 1.116 | 1.118 | 1.118 | 1.117 | 1.116 |

TABLE 5 shows results of physical tests on these compositions.

**TABLE 5: Physical Properties of the Rubber Compositions**

| **Test / Property** | **EX. A** | **EX. D** | **EX. E** | **EX. F** | **EX. G** |
|---|---|---|---|---|---|
| **Rubber Process Analyzer@100°C** | | | | | |
| Uncured G' (15%) @ 0.83Hz (MPa) | 0.25 | 0.25 | 0.26 | 0.26 | 0.26 |
| Cured G' (1%) @ 1Hz (MPa) | 2.34 | 2.43 | 2.57 | 2.88 | 1.82 |
| Cured G' (10%) @ 1Hz (MPa) | 1.37 | 1.47 | 1.58 | 1.83 | 1.02 |
| Cured G' (15%) @ 1Hz (MPa) | 1.25 | 1.35 | 1.45 | 1.72 | 0.91 |
| Cured G' (50%) @ 1Hz (MPa) | 0.88 | 0.95 | 1.03 | 1.21 | 0.64 |
| Cured Tan Δ (10%) @ 1Hz (MPa) | 0.172 | 0.158 | 0.146 | 0.123 | 0.225 |

| **Ring R2 @ 23 °C** | | | | | |
|---|---|---|---|---|---|
| Elongation at break (%) | 523 | 446 | 431 | 319 | 647 |
| Modulus G' at 100% strain (MPa) | 2.2 | 2.5 | 2.8 | 3.6 | 1.4 |
| Modulus G' at 300% strain (MPa) | 11.3 | 13.3 | 14.4 | | 6.3 |
| Modulus Ratio | 5.3 | 5.4 | 5.2 | | 4.6 |
| Tensile Strength (MPa) | 21.26 | 19.78 | 20.42 | 17.21 | 17.69 |
| Specific Gravity | 1.108 | 1.109 | 1.109 | 1.109 | 1.103 |
| Shore A Hardness | 66.3 | 67.8 | 69.9 | 70.9 | 60.8 |
| Rebound(%) | 50.5 | 52.3 | 52.8 | 55.3 | 47.0 |

| **Ring R2 @ 100 °C** | | | | | |
|---|---|---|---|---|---|
| Elongation at break (%) | 456 | 393 | 377 | 239 | 750 |
| Specific energy to break (joules) | 21.3 | 17.9 | 18.0 | 8.5 | 33.4 |
| Modulus G' at 100% strain (MPa) | 1.8 | 2.1 | 2.4 | 3.1 | 1.1 |
| Modulus G' at 200% strain (MPa) | 4.3 | 5.2 | 5.9 | 8.2 | 2.0 |
| Modulus G' at 300% strain (MPa) | 8 | 10 | 10 | | 4 |
| Modulus Ratio (300%/100%) | 4.4 | 4.5 | 4.4 | | 3.3 |
| Tensile Strength (MPa) | 12.2 | 11.9 | 12.3 | 9.1 | 11.6 |

| **ZWICK REBOUND** | | | | | |
|---|---|---|---|---|---|
| Rebound @ 100 °C | 59.2 | 61.1 | 62.8 | 67.0 | 50.4 |

| **STREBLER @ 100°C** | | | | | |
|---|---|---|---|---|---|
| Tear Strength, original (N/mm) | 14.8 | 12.8 | 11.5 | 4.6 | 44.3 |

| **Movinq Die Rheometer (MDR2000^{™}) at a cure temperature of 150°C** | | | | | |
|---|---|---|---|---|---|
| T25 (minutes for the torque to reach 25 % of the difference between minimum and maximum torque) | 4.0 | 3.9 | 5.0 | 2.7 | 7.3 |
| T90 (minutes for the torque to reach 90 % of the difference between minimum and maximum torque) | 9.8 | 9.2 | 9.7 | 6.1 | 19.5 |
| Reversion at 1 hour (mins) | | | 55.4 | | |

| **Test / Property** | **EX. A** | **EX. D** | **EX. E** | **EX. F** | **EX. G** |
|---|---|---|---|---|---|
| **DIN ABRASION @ 23 °C** | | | | | |
| Relative volume loss | 70.4 | 66.4 | 78.6 | 93.3 | 55.8 |

**TABLE 5 (Cont.)**

| **Test / Property** | **EX. H** | **EX. I** | **EX. J** | **EX. K** | **EX. L** |
|---|---|---|---|---|---|
| **Rubber Process Analyzer @ 100 °C** | | | | | |
| Uncured G' (15%) @ 0.83Hz | 0.26 | 0.26 | 0.26 | 0.25 | 0.25 |
| Cured G' (1%) @ 1Hz | 2.17 | 2.36 | 2.63 | 2.43 | 2.13 |
| Cured G' (10%) @ 1Hz | 1.24 | 1.41 | 1.63 | 1.43 | 1.22 |
| Cured G' (15%) @ 1Hz | 1.12 | 1.29 | 1.51 | 1.31 | 1.10 |
| Cured G' (50%) @ 1Hz | 0.79 | 0.91 | 1.07 | 0.92 | 0.78 |
| Cured Tan Δ (10%) @ 1Hz | 0.192 | 0.17 | 0.14 | 0.164 | 0.194 |

| **Rinq R2 @ 23 °C** | | | | | |
|---|---|---|---|---|---|
| Elongation at break (%) | 546 | 455 | 377 | 485 | 586 |
| Modulus G' at 100% strain (MPa) | 1.9 | 2.3 | 3.1 | 2.2 | 1.7 |
| Modulus G' at 300% strain (MPa) | 10.1 | 12.2 | 16.2 | 12.1 | 8.7 |
| Modulus G' Ratio (300/100) | 5.4 | 5.2 | 5.2 | 5.5 | 5.1 |
| Tensile Strength (MPa) | 20.62 | 19.15 | 19.06 | 20.52 | 20.22 |
| Specific Gravity | 1.107 | 1.109 | 1.109 | 1.108 | 1.107 |
| Shore A Hardness | 62.8 | 67.7 | 71.3 | 65.4 | 63.7 |
| Rebound (%) | 48.9 | 51.3 | 56.1 | 51.1 | 48.6 |

| **Rinq R2 @ 100 °C** | | | | | |
|---|---|---|---|---|---|
| Elongation at break (%) | 475 | 404 | 284 | 418 | 557 |
| Specific energy to break (joules) | 19.4 | 17.3 | 10.8 | 18.3 | 24.6 |
| Modulus G' at 100% strain (MPa) | 1.5 | 2.0 | 2.7 | 1.9 | 1.4 |
| Modulus G' at 200% strain (MPa) | 3.4 | 4.6 | 6.9 | 4.5 | 2.9 |
| Modulus G' at 300% strain (MPa) | 7 | 9 | | 8 | 5 |
| Modulus Ratio (300/100) | 4.2 | 4.4 | | 4.4 | 4.0 |
| Tensile Strength (MPa) | 11.0 | 11.2 | 10.0 | 11.6 | 11.7 |

| **ZWICK REBOUND** | | | | | |
|---|---|---|---|---|---|
| Rebound at 100 °C (%) | 55.1 | 58.2 | 64.2 | 59.4 | 53.8 |

| **STREBLER @ 100°C** | | | | | |
|---|---|---|---|---|---|
| Tear Strength, original (N/mm) | 18.9 | 16.1 | 8.3 | 14.6 | 24.4 |

| **Test / Property** | **EX. H** | **EX. I** | **EX. J** | **EX. K** | **EX. L** |
|---|---|---|---|---|---|
| Tear Strength after 4 days @ 90 °C in air (N/mm) | | | | | |

| **Moving Die Rheometer (MDR2000) at a cure temperature of 150°C** | | | | | |
|---|---|---|---|---|---|
| T25 (minutes for the torque to reach 25 % of the difference between minimum and maximum torque) | 4.0 | 5.4 | 2.9 | 3.8 | 6.4 |
| T90 (minutes for the torque to reach 90 % of the difference between minimum and maximum torque) | 13.6 | 11.6 | 7.6 | 9.8 | 14.0 |
| Reversion at 1 hour (mins) | | 101.6 | | | |

| **DIN ABRASION @ 23 °C** | | | | | |
|---|---|---|---|---|---|
| Relative volume loss | 57.0 | 66.0 | 81.7 | 67.6 | 58.9 |

The results suggest that having the three accelerators, as used in Example A, as compared with Examples D-L which lack MBTS, provides improved properties for tests which are predictive of high mileage, without significant loss in other properties. The modifications in the amounts of the other two accelerators are not able to compensate for the lack of MBTS.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent, diluent oil, or other carrier material, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

## Claims

1. A vulcanizable rubber composition for a tire tread, the rubber composition comprising, expressed by weight per hundred parts of elastomer (phr):
100 phr of an elastomer component, the elastomer component comprising natural rubber and a polydiene rubber;
at least 40 phr of carbon black;
optionally, one or more processing aids, the one or more processing aids being selected from a liquid plasticizer, a wax, and mixtures thereof;
a curative system comprising a sulfur-based curing agent, a zinc-based cure activator, an organic cure activator, and a combination of cure accelerators, the combination of cure accelerators comprising:
(i) a sulfenamide accelerator,
(ii) a metal dithiocarbamate accelerator, and
(iii) at least one of a thiazole polysulfide accelerator and a thiuram polysulfide accelerator.

2. The rubber composition of claim 1, wherein the elastomer component comprises from 45 phr to 65 phr of the natural rubber and from 30 phr to 55 phr of the polydiene rubber.

3. The rubber composition of claim 1 or 2, wherein the polydiene rubber comprises polybutadiene rubber and styrene butadiene rubber in a ratio by weight of at least 1.5:1.

4. The rubber composition of at least one of the previous claims, wherein the rubber composition comprises at least 45 phr or 40 phr to 70 phr of the carbon black; and/or wherein the rubber composition comprises no more than 2 phr silica.

5. The rubber composition of at least one of the previous claims, wherein the rubber composition comprises no more than 1 phr resin.

6. The rubber composition of at least one of the previous claims, wherein the combination of cure accelerators comprises:
(i) 0.5 phr to 2 phr or 0.8 phr to 1.5 phr of the sulfenamide accelerator,
(ii) 0.3 phr to 1.2 phr or 0.4 phr to 0.9 phr of the metal dithiocarbamate accelerator, and
(iii) 0.05 phr to 0.4 phr or 0.07 phr to 0.2 phr of the at least one of the thiazole polysulfide accelerator and the thiuram polysulfide accelerator.

7. The rubber composition of at least one of the previous claims, wherein the sulfenamide accelerator is selected from N-cyclohexyl-2-benzothiazolesulfenamide (CBS), N-tert-butyl-2-benzothiazole-sulfenamide (TBBS) and mixtures thereof; and/or wherein the metal dithiocarbamate accelerator includes zinc dibenzyl dithiocarbamate (ZBEC).

8. The rubber composition of at least one of the previous claims, wherein the at least one of the thiazole polysulfide accelerator and the thiuram polysulfide accelerator comprises mercaptobenzothiazole disulfide (MBTS).

9. The rubber composition of at least one of the previous claims, wherein the rubber composition comprises 2.5 phr to 8 phr of the processing aids; and/or wherein the sulfur-based curing agent provides the rubber composition with 0.3 phr to 1.2 phr of active sulfur.

10. The rubber composition of at least one of the previous claims, wherein the zinc-based cure activator consists of zinc oxide at no more than 5 phr of the rubber composition; and/or wherein the rubber composition further comprises at least one of an antioxidant and an antiozonant.

11. The rubber composition of at least one of the previous claims, wherein the elastomer component comprises natural rubber, a polybutadiene rubber and a styrene-butadiene rubber, the ratio by weight of the natural rubber to the polybutadiene rubber being preferably from 50:40 to 60:30, and the ratio by weight of the polybutadiene rubber to the styrene-butadiene rubber being preferably from 30:20 to 40:10.

12. A tire tread formed from or comprising the vulcanizable rubber composition according to at least one of the previous claims as a vulcanized rubber composition.

13. A pneumatic tire, preferably a pneumatic truck tire, comprising the tread of claim 12.

14. A method of forming a tire with relatively high mileage, the method comprising:
a) forming a rubber composition in accordance with at least one of the claims 1 to 11;
b) building a tire, preferably a truck tire, the building including applying said rubber composition as a component of said tire, preferably as a tread of said tire; and
b) curing the tire.

15. A method of forming a tire tread, the method comprising:
a) forming a rubber composition in accordance with at least one of the claims 1 to 11;
b) manufacturing a tire tread using said rubber composition; and
b) curing the tire tread.
